# EUROPÄISCHE PATENTSCHRIFT

(11) **EP 0 861 767 B1**
(45) Veröffentlichungstag und Bekanntmachung des Hinweises auf die Patenterteilung: **17.04.2002**
(21) Anmeldenummer: 97122351.6
(22) Anmeldetag: 18.12.1997
(51) Int. Cl.: B62D 25/20

(54) **Schweller eines Kraftfahrzeugs mit einer Verstärkungseinlage**
Side sill of a motor vehicle having a reinforcing insert
Longeron d'un véhicule à moteur ayant un insert de renforcement

(30) Priorität: 28.02.1997 DE 19708215
(43) Veröffentlichungstag der Anmeldung: 02.09.1998
(73) Patentinhaber: AUDI AG, 85045 Ingolstadt (DE)
(72) Erfinder: Enning, Norbert, 85095 Denkendorf (DE); Ebert, Andreas, 85386 Eching (DE)
(74) Vertreter: Engelhardt, Harald

(56) Entgegenhaltungen:
- DE-A- 4 235 738
- DE-A- 4 306 824
- DE-A- 19 528 874
- PATENT ABSTRACTS OF JAPAN vol. 018, no. 041 (M-1546), 21.Januar 1994 & JP 05 270447 A (NISSAN MOTOR CO LTD), 19.Oktober 1993,

## Beschreibung

Die Erfindung betrifft einen Schweller eines Kraftfahrzeugs mit einer Verstärkungseinlage nach dem Oberbegriff des Anspruchs 1.

Der Schweller eines Kraftfahrzeugs ist ein wesentliches Trag- und Stützelement einer Tragstruktur eines Kraftfahrzeugs. Insbesondere soll der Schweller eine stabile Barriere bei einem Seitencrash gegen eine Eindrückung der Fahrgastzelle darstellen.

Um diese Anforderungen bei einem günstigen, niedrigen Gewicht zu erreichen, ist bereits eine Schwellerausführung bekannt (JP 05270447 A), die in einer Mischbauweise aus einem Aluminiumstrangprofil und aus einem Stahlrohr aufgebaut ist. Das Aluminiumstrangprofil bildet dabei die Außenwände des Schwellers und enthält unter anderem eine zentrale Längskammer, in die formschlüssig das Stahlrohr als Verstärkungseinlage eingesteckt ist. Zudem sind am Aluminiumstrangprofil in Längsrichtung durchgehende Seitenflansche angeformt, über die eine Anbindung zu einer Bodenkonstruktion des Kraftfahrzeugs erfolgt. Für eine Verbindung sind an sich bekannte, aufwendige Aluminium-Schweißverfahren oder Klebeverfahren möglich. Besonders schwierig ist es, hier eine stabile und dauerhafte Verbindung herzustellen, wenn das Aluminiumstrangprofil an angrenzende Karosserieteile aus Stahlblech angeschlossen werden soll. Im Reparaturfall ist das Auswechseln einer solchen Schwellerausführung mit erheblichem Aufwand verbunden, da beispielsweise nach einem Schwelleraustausch Aluminium-Schweißverbindungen an den gleichen Stellen in der Regel nicht zulässig sind.

Weiter ist ein gattungegemäßer Schweller eines Kraftfahrzeugs mit einer Verstärkungseinlage bekannt (DE 195 28 874 A; Fig. 5 und Fig. 6). Die Verstärkungseinlage besteht aus einem langen Strangprofil aus Leichtmetall, die im Rohbau einlegbar ist. Zudem ist ein Befestigungslappen als Knotenelement vorgesehen, der mit angrenzenden Karosserieteilen verbindbar ist.

Diese Ausführung mit einem Befestigungslappen ist verwendet für eine Anordnung, bei der eine Verstärkungseinlage lediglich zwischen dem Bereich des B-Pfostens und eines C-Pfostens vorgesehen ist. Dabei ist eine Anbindung der Verstärkungseinlage über einen Befestigungslappen am Fuß der B-Säule vorgesehen, wobei der Befestigungslappen in Längsrichtung des Profils angeschlossen ist und im wesentlichen zur Überdeckung eines konstruktiv vorhanden Hohlraums dient. Bei einer in der Schrift ebenfalls enthaltenen Ausführungsform mit einer Verstärkungseinlage, die sich über die gesamte Länge des Schwellers erstreckt (Fig. 3), sind keine Befestigungslappen vorgesehen.

Weiter ist ein Schweller in Stahlblechkonstruktion bekannt (US 5 246 264 A) bei dem eine Verstärkungseinlage als integrales Stegblech zum Aufbau eines Mehrkammer-Schwellers in die Hohlstruktur eingeschweißt ist.

Zudem ist ein Aufprallträger als Leichtmetall-Strangprofil zur Einlage und zur Versteifung in ein Kraftfahrzeugwandteil, insbesondere in eine Kraftfahrzeugtür bekannt (DE 43 06 824 A).

Bei einem weiter bekannten Abschlußteil eines Fahrzeuglängsträger in der Art eines Strangprofilabschnitts (DE 42 35 738 A) sind Befestigungselemente mit angeformt und zu Anschlußlappen herausgeschnitten und bearbeitet.

Aufgabe der Erfindung ist es, einen gattungsgemäßen Schweller eines Kraftfahrzeugs mit einer Verstärkungseinlage hinsichtlich seiner Stabilität in Verbindung mit der angrenzenden Karosseriestruktur zu verbessern und insbesondere für einen Einsatz in einer Mischbauweise bei einer Verstärkungseinlage insgesamt aus Leichtmetall und angrenzenden Karosserieteilen aus Stahlblech auszubilden.

Diese Aufgabe wird mit den kennzeichnenden Merkmalen des Anspruchs 1 gelöst.

Gemäß Anspruch 1 ist die Verstärkungseinlage eine einstückige Baugruppe, die sich über die gesamte Länge des Schwellers erstreckt. An dieser Verstärkungseinlage sind ein vorderes, mittleres und hinteres Knotenelement vorgesehen, die in der Einbaulage der Verstärkungseinlage vom Strangprofilteil nach oben abstehen. Das vordere, mittlere und hintere Knotenelement sind dann jeweils mit einem unteren Bereich eines A-Pfostens, eines B-Pfostens und eines C-Pfostens einer Fahrzeugkarosserie durch Schraubverbindungen verbindbar. Die Knotenelemente sind dabei Leichtmetallgußteile, die mit dem Strangprofilteil durch Schweißen oder Verkleben verbunden sind.

Durch Verwendung eines langen Strangprofilteils aus Leichtmetall als Verstärkungseinlage in einem Schwellerhohlträger, wird ein insgesamt gewichtsgünstiger Aufbau erreicht, wobei der Schwellerhohlträger in herkömmlicher Weise als Stahlblechkonstruktion ausgeführt sein kann. Die mechanische Abstützung und Anbindung der Verstärkungseinlage erfolgt über die am Strangprofilteil angeschlossenen Knotenelemente, so daß bei einem Seitencrash die Stoßenergie unmittelbar in die Tragstruktur eingeleitet wird und nicht nur durch Vermittlung über den umgebenden Schwellerhohlträger. Durch das in den umgebenden Schwellerhohlträger eingelegte Strangprofilteil aus Leichtmetall mit angeschlossenen Knotenelementen wird eine einfache Verbindungstechnik in Verbindung mit herkömmlichen Stahlblechaufbauten möglich mit einer gezielten Krafteinleitung in stabile Karosserieabstützpunkte.

Dazu stehen in der Einbaulage die Knotenelemente vom Strangprofilteil etwa nach oben ab. Ein vorderes, mittleres und hinteres Knotenelement sind jeweils mit einem unteren Bereich eines A-Pfostens, eines B-Pfostens und eines C-Pfostens einer Fahrzeugkarosserie verbindbar und die Knotenelemente sind hier zudem als Verstärkungen verwendbar.

Die Knotenelemente sind in den erforderlich unregelmäßigen Formen einfach herstellbare Leichtmetallgußteile, die mit dem Strangprofil durch an sich bekannte Verbindungstechniken, wie Schweißen oder Verkleben, zu einer Baugruppe verbunden sind. Die Anbindung zu angrenzenden Karosserieteilen erfolgt durch Schraubverbindungen, bevorzugt durch eine Doppelnutzung ohnehin vorhandener Schraubpunkte (Anspruch 2), wie Scharnierschraubpunkte und/oder Sicherheitsgurtschraubpunkte, die im unteren Bereich der Karosseriepfosten angebracht sind. Dadurch ergibt sich eine einfache und schnelle Endmontage der Verstärkungseinlage mit einer stabilen und für hohe Krafteinleitungen geeigneten Anbindung zur Karosserietragstruktur. Da diese Verbindung ohne Schweißtechniken auskommt, ist eine Verbindung zu angrenzenden, herkömmlichen Stahlblechkonstruktionen unproblematisch. Zudem wird dadurch eine besonders reparaturfreundliche Anordnung geschaffen, bei der eine solche Verstärkungseinlage nur durch Schraubverbindungen auswechselbar ist, womit insbesondere aufwendige Aluminiumschweißungen im Werkstattbereich vermieden werden.

Zur Erhöhung der Steifigkeit in Verbindung mit einer Gewichtsreduzierung wird nach Anspruch 3 ein Strangprofilteil mit mehreren Kammern vorgeschlagen, die durch Stege abgetrennt sind.

Nach Anspruch 4 werden in das Strangprofilteil an dessen Unter- und/oder Oberseite längsseits durchgehende Schraubkanäle für Schneidschrauben eingeformt. Damit ist eine Anbindung und Fixierung der Verstärkungseinlage im umgebenden Schwellerhohlträger auf einfache Weise durchführbar, wobei dieser Schwellerhohlträger sowie weitere angrenzende Karosserieteile aus Stahlblech hergestellt sein können (Anspruch 5).

Anhand einer Zeichnung wird ein Ausführungsbeispiel der Erfindung näher erläutert.

Es zeigen:
- Fig. 1: eine perspektivische Seitenansicht einer Verstärkungseinlage für einen Schweller eines Kraftfahrzeugs, und
- Fig. 2: einen Querschnitt der Verstärkungseinlage nach Fig. 1 entlang der Linie A-A.

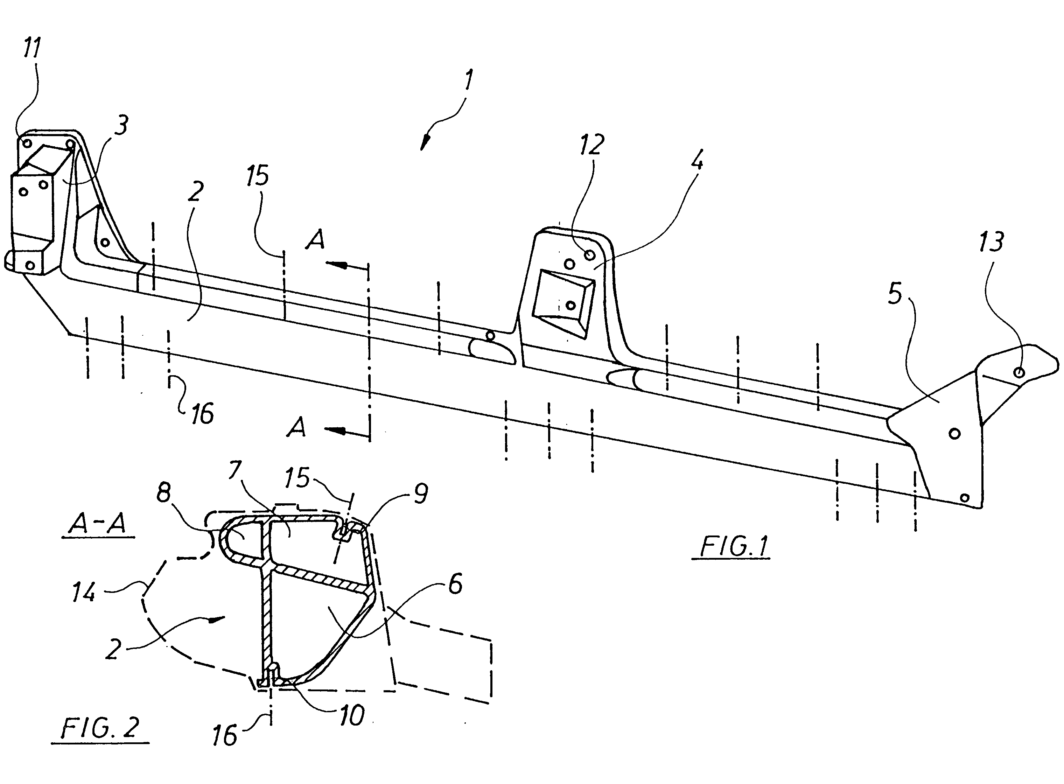

In den Fig. 1 und 2 ist eine Verstärkungseinlage 1 als einstückige Baugruppe dargestellt, die aus einem langen Strangprofilteil 2 aus Leichtmetall, bevorzugt aus einer Aluminiumlegierung mit drei angeschlossenen Knotenelementen 3, 4, 5 besteht.

Das Strangprofilteil 2 enthält drei Kammern 6, 7, 8. Zudem sind an der Unterseite und an der Oberseite des Strangprofilteils 2 längsseits durchgehende Schraubkanäle 9, 10 eingeformt.

Die drei Knotenelemente 3, 4, 5 stehen laschenartig in der in Fig. 1 gezeigten Einbaulage nach oben ab. Die Knotenelemente 3 und 5 sind als vorderes Knotenelement 3 und hinteres Knotenelement 5 an den Endseiten des Strangprofils 2 angebracht. Ein mittleres Knotenelement 4 ist etwa im mittleren Bereich des Strangprofilteils 2 befestigt.

Die Knotenelemente 3, 4, 5 sind als Leichtmetallgußteile hergestellt. Die Verbindung zwischen dem Strangprofilteil 2 und den Knotenelementen 3, 4, 5 kann durch Schweißen oder Verkleben erfolgen, wodurch in einer Vormontage die in Fig. 1 dargestellte, vormontierte Baugruppe erhalten wird. Die Knotenelemente 3, 4, 5 sind so ausgebildet, daß sie mit jeweils einem unteren Bereich eines (nicht dargestellten) A-Pfostens, B-Pfostens und C-Pfostens einer Fahrzeugkarosserie verbindbar sind. Dazu sind an jedem Knotenelement 3, 4, 5 Bohrungen 11, 12, 13 vorgesehen, die zumindest teilweise mit ohnehin vorhandenen Bohrungen und Aufnahmen für Türscharniere und/oder Sicherheitsgurtbefestigungen fluchten. Bei der Anbringungen von Verschraubungen werden damit solche ohnehin vorhandenen Befestigungspunkte doppelt genutzt.

Im fertig montierten Zustand ist die Verstärkungseinlage bzw. der Strangprofilteil 2 in einen umgebenden Schwellerhohlträger 14 eingelegt, wie dies strichliert in Fig. 2 dargestellt ist. Die Knotenelemente 3, 4, 5 sind mit den unteren Bereichen der zugeordneten Pfosten verbunden. Zudem sind die Bleche des Schwellerhohlträgers 14 und/oder weitere Anbauteile über Schneidschrauben 15, 16 (schematisch durch strichpunktierte Linien dargestellt) mit dem Strangprofilteil 2 über die Schraubkanäle 9, 10 verbunden.

Damit wird mit einfachen Mitteln und geringem Gewichtseinsatz eine wirksame Verstärkung bei einem Seitencrash im Schweller, insbesondere einer Stahlkarosserie geschaffen.

## Patentansprüche

1. Schweller eines Kraftfahrzeugs mit einer Verstärkungseinlage (1),
die aus einem langen Strangprofilteil (2) aus Leichtmetall mit einem angeschlossenen Knotenelement (3, 4, 5) besteht, und die im Rohbau einlegbar und mit dem Knotenelement (3, 4, 5) mit angrenzenden Karosserieteilen verbindbar ist,
**dadurch gekennzeichnet,**
**daß** die Verstärkungseinlage (1) eine einstückige Baugruppe ist und sich über die gesamte Länge des Schwellers (14) erstreckt,
**daß** an der Verstärkungseinlage (1) ein vorderes, mittleres und hinteres Knotenelement (3, 4, 5) vorgesehen sind, die in der Einbaulage der Verstärkungseinlage (1) vom Strangprofilteil (2) etwa nach oben abstehen,
**daß** das vordere, mittlere und hintere Knotenelement (3, 4, 5) jeweils mit einem unteren Bereich eines A-Pfostens, eines B-Pfostens und eines C-Pfostens einer Fahrzeugkarosserie durch Schraubverbindungen (11, 12, 13) verbindbar sind, und
**daß** die Knotenelemente (3, 4, 5) Leichtmetallgußteile sind, die mit dem Strangprofilteil (2) durch Schweißen oder Verkleben verbunden sind.

2. Schweller nach Anspruch 1, **dadurch gekennzeichnet, daß** die Anbindung der Knotenelemente (3, 4, 5) mit Schraubverbindungen (11, 12, 13) durch Doppelnutzung ohnehin vorhandener Schraubpunkte, wie Scharnierschraubpunkte und/oder Sicherheitsgurtschraubpunkte erfolgt.

3. Schweller nach Anspruche 1 oder Anspruch 2, **dadurch gekennzeichnet, daß** das Strangprofilteil (2) mehrere Kammern (6, 7, 8) enthält.

4. Schweller nach einem der Ansprüche 1 bis 3, **dadurch gekennzeichnet, daß** an der Unter- und/oder Oberseite des Strangprofilteils (2) ein längsseitig durchgehender Schraubkanal (9, 10) für Schneidschrauben (15, 16) eingeformt ist.

5. Schweller nach einem der Ansprüche 1 bis 4, **dadurch gekennzeichnet, daß** die angrenzenden Karosserieteile Stahlblechteile sind.

## Claims

1. Motor vehicle sill beam with a reinforcing insert (1)
which consists of a long extruded section (2) made of light metal with an attached gusset element (3, 4, 5), and which is adapted to be inserted in the vehicle body structure and to be joined with the gusset element (3, 4, 5) to contiguous parts of the vehicle body,
**characterised in that**
the reinforcing insert (1) is a one-piece structural component and extends the entire length of the sill beam (14),
provided on the reinforcing insert (1) are a front, middle and rear gusset element (3, 4, 5) which protrude more or less upwards from the extruded section (2) once the reinforcing insert (1) is in position,
the front, middle and rear gusset elements (3, 4, 5) are respectively adapted to be joined by bolted connections (11, 12, 13) to a lower region of an A-pillar, B-pillar or C-pillar of a vehicle body, and
the gusset elements (3, 4, 5) are light metal cast parts which are joined to the extruded section (2) by welding or bonding them.

2. Sill beam according to claim 1, **characterised in that** the gusset elements (3, 4, 5) are attached with bolted connections (11, 12, 13) by the dual use of pre-existing bolting points such as hinge bolting points and/or seat belt bolting points.

3. Sill beam according to claim 1 or claim 2, **characterised in that** the extruded section (2) contains a plurality of compartments (6, 7, 8).

4. Sill beam according to any of claims 1 to 3, **characterised in that** formed on the lower and/or upper face of the extruded section (2) is a longitudinally continuous screw channel (9, 10) for self-tapping screws (15, 16).

5. Sill beam according to any of claims 1 to 4, **characterised in that** the contiguous vehicle body parts are sheet steel parts.

## Revendications

1. Longeron d'un véhicule automobile, avec un insert de renforcement (1), constitué d'une partie en profilé extrudé de long en métal léger, avec un élément formant noeud (3, 4, 5) raccordé, et insert susceptible d'être inséré dans la construction brute, et d'être relié à des éléments de carrosserie limitrophes, par la partie formant noeud (3, 4, 5),
**caractérisé en ce que**,
l'insert de renforcement (1) est un groupe de construction réalisé d'une seule pièce et s'étend sur toute la longueur du longeron (14),
**en ce que**, sur l'insert de renforcement (1), sont prévus les éléments formant noeud (3, 4, 5) avant, médian et arrière, éléments faisant saillie quelque peu vers le haut depuis la partie en profilé extrudé (2), lorsque l'insert de renforcement (2) est à la position montée,
**en ce que** les éléments formant noeud avant, médian et arrière (3, 4, 5) sont susceptibles d'être reliés chacun à une zone inférieure d'un pilier A, d'un pilier B et d'un pilier C d'une carrosserie de véhicule, et d'être reliés par des liaisons vissées (11, 12, 13),
**en ce que** les éléments formant noeud (3, 4, 5) sont des pièces de fonderie en métal léger, qui sont reliées, par soudage ou collage, à la partie en profilé extrudé (2).

2. Longeron selon la revendication 1, **caractérisé en ce que** la liaison des éléments formant noeud (3, 4, 5) s'effectue avec des liaisons vissées (11, 12, 13), par utilisation double de points de vissage qui, de toutes façons, existent, tel que des points de vissage de charnière et/ou des points de vissage de ceinture de sécurité.

3. Longeron selon la revendication 1 ou la revendication 2, **caractérisé en ce que** la partie en profilé extrudé (2) contient plusieurs chambres (6, 7, 8).

4. Longeron selon l'une des revendications 1 à 3, **caractérisé en ce qu'**un canal de vissage (9, 10), pour des vis auto-taraudeuses (15, 16), continu côté longitudinal, est ménagé sur la face inférieure et/ou la face supérieure de la partie en profilé extrudé (2).

5. Longeron selon l'une des revendications 1 à 4, **caractérisé en ce que** les parties de carrosserie limitrophes sont des pièces en tôle d'acier.
